# EUROPEAN PATENT APPLICATION

(11) **EP 3 236 411 A1**
(43) Date of publication of application: **25.10.2017**
(21) Application number: 14908371.9
(22) Date of filing: 15.12.2014
(51) Int. Cl.: G06Q 50/28

(54) **DISTRIBUTION ASSISTANCE METHOD, SYSTEM, AND PROGRAM**

(71) Applicant: Keysoft Inc., Ashigarakami-gun Kanagawa 258-0002 (JP)
(72) Inventor: KAGIWADA Yoshimitsu, Ashigarakami-gun Kanagawa 258-0002 (JP)
(74) Representative: Leinweber & Zimmermann
(86) International application number: PCT/JP2014/083148
(87) International publication number: WO 2016/098161

(57) **Abstract**

[Object]

An object is to provide a new form of distribution that can more reduce the cost of acquiring products even in a case of buying a small amount of low-price products from direct sales, for example, than in a case of busing via intermediary distribution.

[Solving Means]

A logistics information system (1) stores transportation information. The transportation information includes package identification information, delivery destination identification information of the package, and transportation-related information of the package. The logistics information system (1) compares sets of the transportation information so as to search for sets of transportation information for packages that: have the same delivery destination identification information; and stay in the same transportation depot at the same moment or are expected to stay in the same transportation depot at the same moment, based on the transportation-related information. Then, the logistics information system (1) transmits the pieces of the package identification information to a transportation depot terminal (4) so as to consolidate the packages specified by the searched-out sets of transportation information in one consignment.

## Description

### TECHNICAL FIELD

The invention relates to a logistics support method and system suitable for direct sales.

### BACKGROUND ART

Today, since cost of buying products is considered to increase as more intermediary distribution is involved, direct sales without involving intermediary distribution for reducing the cost have been becoming more popular. However, there may be a case where direct sales rather cause higher cost. For example, if a middleman purchases a large number of products for 50 yen each at once and sells each product for 100 yen to a consumer face-to-face, the consumer can acquire the product for 100 yen. On the other hand, when buying only one of the same products for 50 yen from direct sales and its delivery fee is 500 yen, the consumer needs to cost 550 yen for acquiring the same product. In this case, the latter results in higher cost of buying the product than the former.

However, a trend of the times moves toward direct sales distribution. Thus, the inventor of the application conceives that it is necessary to create a new form of distribution that takes into account cases of buying a small number of products from direct sales like the above.

Patent Literature 1, for example, is one of prior art documents intended to reduce the logistics cost.

### CITATION LIST

### PATENT LITERATURE

Patent Literature 1: Japanese Patent Application Publication No. 2005-215952

### SUMMARY OF INVENTION

### TECHNICAL PROBLEMS

An object of the invention is to provide a new form of distribution that can more reduce the cost of acquiring a product even in a case of buying a small number of low-price products from direct sales, for example, than in a case of buying via intermediary distribution.

### SOLUTION TO PROBLEMS

In a case where an individual uses direct sales, the number of purchased products per item is very small, in general. However, let us consider a total number of various products consumed or used per day by an individual, and then assume that that total number of products is transported. In this case, it can by no means be said that the number of products transported even for an individual is small. For example, in a case of logistics of a self-employed store, a number of products transported for the store can be considered to be substantially equal to a number of products transported for a whole household of the self-employed person on the analogy of the principle of three aspects equivalence. Until now, logistics have been conducted based on an individual "product" as a key; however, the inventor of the application conceives that the cost of acquiring a product from direct sales can be reduced more than ever by changing the logistics to logistics based on a "person (delivery destination)" as the key.

In the invention of the application, multiple packages to the same delivery destination are consolidated on a logistics route so as to increase a number of packages transported for delivery to a delivery destination at a time. This achieves reduction of the logistics cost.

To this end, the invention of the application adopts the following configuration.

In a logistics support system including a logistics information system that performs communication with at least transportation depot terminals via a computer network, the transportation depot terminals being provided in transportation depots,
the logistics information system stores at least transportation information in a storage device, the transportation information being information in which at least package identification information that allows unique specification of a package, delivery destination identification information that allows unique identification of a delivery destination of the package, and transportation-related information about transportation of the package are associated with each other, multiple sets of the transportation information being stored for respective packages, and
the logistics information system compares the sets of transportation information so as to search for sets of transportation information for packages that: have the same delivery destination identification information; and stay in the same transportation depot at the same moment or are expected to stay in the same transportation depot at the same moment, based on the transportation-related information, and transmits the pieces of the package identification information included in the searched-out sets of transportation information to the transportation depot terminal provided in the transportation depot in which the packages stay or are expected to stay at the same moment so as to consolidate the packages specified by the searched-out sets of transportation information in one consignment.

### ADVANTAGEOUS EFFECTS OF INVENTION

According to the invention, a new form of distribution can be established, which can reduce the cost of acquiring a product more than ever even when buying, for example, a small number of low-price products from direct sales.

### BRIEF DESCRIPTION OF DRAWINGS

[Fig. 1] A configuration diagram of a logistics support system that is an embodiment of the invention.
[Fig. 2] A flowchart of order information.
[Fig. 3] A flowchart of packages.
[Fig. 4] A structure diagram of transportation information.

### DESCRIPTION OF EMBODIMENTS

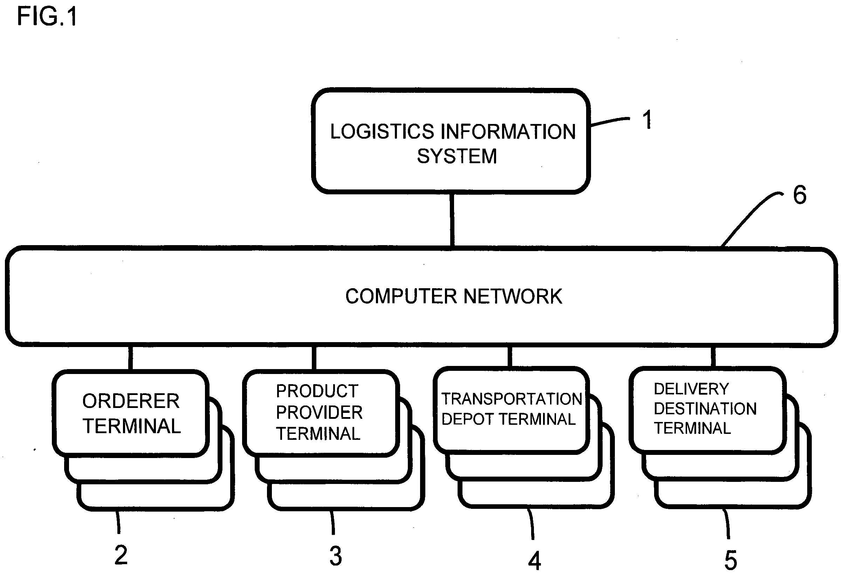

An embodiment of the invention is described below with reference to the drawings. Fig. 1 is an entire configuration diagram of a logistics support system that is an embodiment of the invention. Computer network 6 is connected to multiple orderer terminals 2, multiple product provider terminals 3, multiple transportation depot terminals 4, multiple delivery destination terminals 5, and logistics information system 1 communicating with these terminals 2 to 5.

Orderer terminal 2 is a terminal operated by a person or an agent who orders a product. Since there are multiple orderers who use the system, there are multiple orderer terminals 2.

Product provider terminal 3 is a terminal operated by a person or an agent who provides a product. Since there are multiple product providers who use the system, there are multiple product provider terminals 3. A product provider is a person who provides a product to a downstream side of distribution. The product provider includes not only a producer but also a wholesaler and a retailer.

Transportation depot terminal 4 is a terminal operated by an operator or an agent who is at a transportation depot. Since there are multiple transportation depots in which the system is used, there are multiple transportation depot terminals 4. The transportation depots may include not only transportation depots of a particular merchant but also transportation depots of various merchants. Also, carriers for transportation between the transportation depots may include not only a particular carrier but also various carriers. Depots of the wholesaler and the retailer can also be the transportation depots. In a case where a product provided form an upstream of logistics is distributed to a depot at a downstream via the depots of the wholesaler and the retailer, the depots of the wholesaler and the retailer can be conceived as the transportation depots. Thus, there are merchants serving as both the product provider and the transportation depot like the wholesaler and the retailer, and there are transportation depots having stocks of a product.

Delivery destination terminal 5 is a terminal operated by a person or an agent who is a delivery destination of a product. Since there are multiple delivery destinations in which the system is used, there are multiple delivery destination terminals 5.

In the embodiment, computer network 6 includes the Internet, and logistics information system 1 is provided with a server function that terminals 2 to 5 are clients thereof. Each of terminals 2 to 5 and logistics information system 1 is a computer provided with an input device, an output device, a storage device, a processing device, and a communication device. The processing device of each computer executes various kinds of processing by executing a program stored in the storage device. The communication device of each of terminals 2 to 5 may be a radio communication device. Each of terminals 2 to 5 may be a tablet terminal, a smartphone, and the like. The computer network in the invention of the application may not include the Internet.

Logistics information system 1 and product provider terminal 3 acquire order information transmitted from orderer terminal 2 and store it in own storage device. Two routes can be conceived for acquiring the order information.

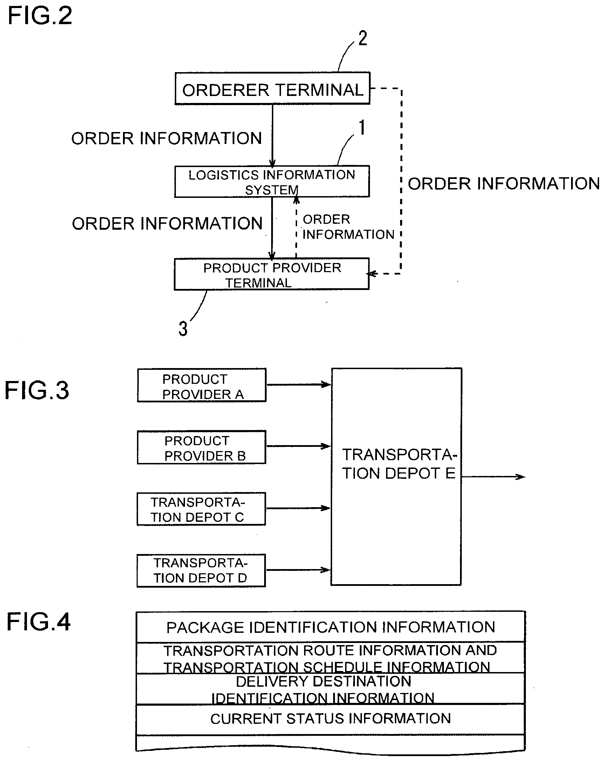

A first route is a route indicated by a solid arrow in Fig. 2. In the first route, logistics information system 1 firstly receives the order information from orderer terminal 2, and then logistics information system 1 forwards the order information to predetermined product provider terminal 3.

A second route is a route indicated by a dashed line in Fig. 2. In the second route, product provider terminal 3 firstly receives the order information from orderer terminal 2, and then product provider terminal 3 forwards the order information to logistics information system 1.

Here, the forwarded order information does not have to completely coincide with the order information before forwarding, and only the information required at the forwarding destination may be extracted and forwarded.

In a case of adopting the first route, logistics information system 1 has to select a product provider or a transportation depot having stocks (hereinafter called "product provider and the like") as a forwarding destination of the order information. When the order information includes identification information of the product provider and the like, the order information may be forwarded to terminals 3 and 4 of the product provider and the like specified by the identification information. On the other hand, when the order information includes no identification information of the product provider and the like, logistics information system 1 selects the product provider and the like, who provides the product, based on product identification information included in the order information. In this case, logistics information system 1 stores in advance forwarding destination information associated with the product identification information of the product and identification information of the product provider and the like having stocks of the product. Then, logistics information system 1 searches for the forwarding destination information corresponding to the product identification information included in the order information in the storage device, and acquires the identification information of the product provider and the like having the stocks of the product from the search result. Logistics information system 1 stores information required for push distribution or pull distribution to terminals 3 and 4 of the product provider and the like while associating the information with the identification information of the product provider and the like.

In Fig. 3, based on the order information, once a package including a product is arrived in transportation depot E from product provider A, transportation depot terminal 4 of transportation depot E transmits invoice information of the package to logistics information system 1. Logistics information system 1 stores the invoice information in the storage device. The invoice information at least includes package identification information that allows unique specification of a package corresponding to the invoice (invoice number and the like), identification information of transportation depot E that transmits the invoice information (depot code and the like), and delivery destination identification information that allows unique identification of a delivery destination of the package (an address, a code that allows unique identification of an address, or the like).

Based on the received invoice information, logical information system 1 sets a route of transportation depots where the package goes through, between transportation depot E and the delivery destination (transportation route information), sets dates and times when the package should be arrived in each transportation depot on the route and dates and times when the package should be shipped from each transportation depot (transportation schedule information), and stores the transportation route information and the transportation schedule information in the storage device while associating them with the package identification information. Logistics information system 1 stores current status information, which indicates that the package currently stays at transportation depot E, and the delivery destination identification information of the package in the storage device while associating them with the package identification information of the package. Thus, transportation information with the structure illustrated in Fig. 4 of each package is stored in the storage device of the logistics information system. Here, the transportation route information and the transportation schedule information are preferably set automatically by arithmetic processing of the computer. A technique disclosed in Japanese Patent Application Publication No. H08-235263 is an example of setting automatically the transportation route information and the transportation schedule information, for example. Here, "transportation route information", "transportation schedule information", and "current status information" fall under "transportation-related information" stated in claims.

In Fig. 3, likewise, when a package from product provider B is arrived in transportation depot E, transportation depot terminal 4 transmits the invoice information of the package to logistics information system 1, and logistics information system 1 generates the transportation information of the package and stores it in the storage device. Likewise, when a package from any product provider is arrived in any transportation depot, transportation depot terminal 4 transmits the invoice information of the package to logistics information system 1, and logistics information system 1 generates the transportation information of the package and stores it in the storage device.

In Fig. 3, likewise, when transportation depot E is a transportation depot having stocks from which the stocks are shipped as a product, transportation depot terminal 4 transmits the invoice information of the package to logistics information system 1, and logistics information system 1 generates transportation information of the package and stores it in the storage device. Likewise, when any transportation depot ships the stocks as a product, transportation depot terminal 4 transmits the invoice information of the package to logistics information system 1, and logistics information system 1 generates the transportation information of the package and stores it in the storage device.

As first consolidation determination processing, logistics information system 1 searches for transportation information that coincides with both the current status information and the delivery destination identification information among sets of the transportation information, which are stored in the storage device. When transportation information system 1 finds the transportation information that coincides with both the current status information and the delivery destination identification information, that is, when transportation information system 1 finds packages to the same delivery destinations at the same transportation depot, the transportation information system 1 transmits the package identification information of the package to the transportation depot terminal of the transportation depot, thereby notifying of the stay of multiple packages to the same delivery destination.

Transportation depot terminal 4 that receives the notification outputs the package identification information of the package to the same delivery destination staying in the transportation depot to the output device. In the transportation depot, a worker who checks the package identification information outputted to the output device consolidates the multiple packages corresponding to the package identification information in the same consignment. Product providers of the multiple packages may be different.

Cases where packages to the same delivery destination stay at one transportation depot at the same moment are, in an example of Fig. 3, a case where the package shipped from product provider A and the package shipped from product provider B stay at the same moment, and a case where the package shipped from product provider A or B and the packages arrived in transportation depot E from upstream transportation depot C or D stay at the same moment. Further, there is a case where the packages from those A, B, C, and D and a package of the stocks of transportation depot E shipped as a product stay at the same moment.

As second consolidation determination processing, logistics information system 1 searches multiple sets of transportation information stored in the storage device to find multiple packages that: have the common delivery destination identification information; have at least one transportation depot common to their transportation routes; and are expected to stay in the transportation depot at the same moment. Whether at least one transportation depot is common to their transportation routes is determined by comparing values of pieces of transportation route information included in the sets of transportation information to be compared. Whether the packages stay in the transportation depot at the same moment is determined based on whether there is an overlap between terms for which the packages stay in the transportation depot (from a day and time of scheduled arrival at the transportation depot (stay start time) to a day and time of scheduled shipment (stay end time)) in the pieces of the transportation schedule information included in the sets of transportation information to be compared.

When transportation information system 1 finds the multiple packages that: have the common delivery destination identification information; have at least one transportation depot common to their transportation routes; and are expected to stay in the transportation depot at the same moment, the transportation information system 1 transmits the pieces of package identification information of the multiple packages to the transportation depot terminal of the transportation depot, thereby notifying of that multiple packages to the same delivery destination are expected to stay at the same moment.

Transportation depot terminal 4 that receives the notification outputs the package identification information of the packages to the same delivery destination that are expected to stay in the transportation depot at the same moment, to the output device. In the transportation depot, the worker who checks the package identification information outputted to the output device consolidates the multiple packages corresponding to the package identification information in the same consignment. Product providers of the multiple packages may be different.

As third consolidation determination processing, in a case where there are multiple packages that their delivery destination identification information are common and at least one transportation depot on the transportation route is common but the packages do not stay in the common transportation depot at the same moment, in which a difference between the stay end time of one of the packages that stays in the transportation depot earlier and the stay start time of rest of the packages that stays in the transportation depot later is within a predetermined option term (within two days, for example), logistics information system 1 transmits an inquiry message such as "Do you postpone the stay end time of one of the packages that stays in the transportation depot earlier for after the stay start time of rest of the packages that stays in the transportation depot later or not?" to delivery destination terminal 5 corresponding to the delivery destination identification information of the packages. Once receiving the message such as "We postpone the term." from delivery destination terminal 5 as the answer for the above inquiry, logistics information system 1 changes the stay end time of the package that stays earlier to a time that is a predetermined term later than the stay start time of the package that stays later, and recalculates the transportation schedule of the package that stays earlier for update. Based on the updated transportation schedule information, logistics information system 1 executes the above second consolidation determination processing.

The consignment in which the packages to the same delivery destination are consolidated is shipped from the current transportation depot to a next transportation depot or the delivery destination. When the packages are shipped, transportation depot terminal 4 of the current transportation depot transmits the package identification information of the shipped packages to the logistics information system. Once receiving the information, the logistics information system updates pieces of the current status information of sets of the transportation information with coincident pieces of the package identification information.

In Fig. 3, when a package is arrived in the next transportation depot from current transportation depot E, the transportation depot in which the package is arrived is assumed to be transportation depot E in Fig. 3, and the above processing is repeated. The processing same as the above is repeated in each transportation depot.

Thus, the packages to the same delivery destination, which are shipped from various product providers and the like at various times, are consolidated in the same consignment as much as possible in each transportation depot on the transportation route, and are delivered to the delivery destination together. Gradually integrating the logistics to the same delivery destination together from the upstream side of the logistics route allows reduction of the transportation cost more than a case where each package is transported via an individual logistics route. Hence, the cost of acquiring a product can be reduced more than ever even when an individual person and the like buy a small number of products from direct sales.

Here, the above embodiment states that logistics information system 1 selects the product provider and the like from which a product is provided, based on the product identification information included in the order information. In this case, logistics information system 1 stores in advance the forwarding destination information, which is associated with the identification information of the product and the identification information of the product provider and the like from which the product is provided, in the storage device. This forwarding destination information may be information in which multiple pieces of identification information of multiple product provider and the like are associated with one piece of product identification information.

In the structure of the forwarding destination information, the multiple pieces of identification information of the multiple product provider and the like are associated with the one piece of product identification information, and stock information of each product provider and the like of a product corresponding to the one piece of product identification information is associated with the identification information of each product provider and the like. The identification information of a shipment place of each product provider and the like is associated with the identification information of each product provider and the like, and the shipment place information associated with the identification information of the transportation depot nearest to each product provider is registered in advance to the identification information of each product provider and the like. Logistics information system 1 stores in advance the forwarding destination information and the shipment place information in the storage device.

There can be various ways for acquiring the stock information (stock status, stock amount) of a product in each product provider and the like. For example, based on an arrival amount and a shipment amount of the product in any product provider and the like, logistics information system 1 can calculate the current stock amount of the product in the product provider and the like. An amount of product A arrived in product provider and the like B can be determined by storing the order information and the transportation information of its package in the storage device while associating them with each other, and referring to the amount of the product A included in the order information and the current status information indicating completion of delivery included in the transportation information. An amount of product A shipped from product provider and the like B can be determined by storing the order information and the transportation information of its package in the storage device while associating them with each other, and referring to the amount of the product A included in the order information and the current status information indicating completion of acceptation included in the transportation information. Of course, the product provider and the like may transmit the stock data stored in own computer for stock management to logistics information system 1 so as to allow logistics information system 1 to acquire the stock data.

In a first way to select the product provider or the like to provide the product based on the product identification information included in the order information, logistics information system 1 may select the product provider or the like with the shortest distance between the address of the delivery destination, which is acquired based on the delivery destination identification information included in the order information, and the shipment place of the product provider and the like, which has currently the stocks of the product. Logistics information system 1 determines the stock state of the product based on the stock information included in the forwarding destination information, and determines the address of the shipment place based on the identification information of the shipment place included in the shipment place information. Determination of whether the distance between the address of the delivery destination and the address of the shipment place is the shortest may be made based on a direct distance between the addresses on a map, based on a distance resulted from route search of a roadway from the address of the shipment place to the address of the delivery destination, or based on an estimated time taken for transportation on the searched route from the shipment place to the delivery destination.

Thus, since the ordered product is shipped from the stocks of the product provider nearest to the delivery destination, the transportation route can be the shortest, and this can contribute to further reduction of the transportation cost.

In a second way to select the product provider or the like to provide product A based on the product identification information included in the order information, logistics information system 1 may search the storage device for the transportation information, the delivery destination identification information of which coincides with the delivery destination identification information included in the order information, specify the transportation depots which the package is to pass through after now, using the transportation route information included in the searched transportation information, and select, from multiple product providers and the like having the stock of product A and using the specified transportation depots as the nearest transportation depots, a product provider or the like located at the shortest distance from the nearest transportation depot among the product providers and the like. Information of "transportation depots which the package is to pass through after now" can be specified based on the transportation route information and the current status information included in the transportation information. Information of "the nearest transportation depot" can be acquired based on the above "shipment place information". Whether it is "the nearest" can be determined with the same way as the above first way.

Thus, the packages to the common delivery destination can be delivered quickly to the transportation depot where the package being shipped earlier passes through, and the packages can be consolidated. There is also a case of the wholesaler and the like, where stocks are left and the old stocks are disposed. However, according to the embodiment, the opportunities for shipping the old stocks in the market increase, a number of the products to be disposed decreases, and the stock turnover of the wholesaler and the like becomes better. The stocks are more likely to be turned to new, and also food products are prevented from being expired. Because of the better stock turnover, the opportunities for ordering products of the wholesaler and the like increase, and the opportunities for ordering the product that had been ordered independently with another product and for shipping them together increase. This contributes to efficiency of logistics and reduction of the logistics cost.

For a modification of the above embodiment, "delivery destination identification information" may be replaced by "delivery destination area identification information". This "delivery destination area identification information" may be allocated to multiple neighboring delivery destinations, and then packages that include common delivery destination area identification information may be consolidated on the transportation route. This enables the packages to the neighboring delivery destinations to be consolidated on the transportation route, and this enables a larger number of packages to be transported together to the delivery destination area than a number of packages transported to one delivery destination. Hence, further efficiency of logistics and reduction of the logistics cost can be achieved.

Here, the invention of the application is not limited to the above embodiments and is within the scope of the invention stated in claims. For example, association of multiple pieces of information is not limited to the case of being associated with each other by one table and is in any form as long as the multiple pieces of information are being associated with each other. The above embodiment is described from the step of occurrence of the order information; however, the effects of consolidating the packages to the same delivery destination or to the neighboring delivery destinations can be acquired regardless of handling of the order information. Hence, handling of the order information is not the requirement for the invention of the application.

### REFERENCE SIGNS LIST

- 1: logistics information system
- 2: orderer terminal
- 3: product provider terminal
- 4: transportation depot terminal
- 5: delivery destination terminal
- 6: computer network

## Claims

1. A logistics support method in a logistics support system including a logistics information system that performs communication with at least transportation depot terminals via a computer network, the transportation depot terminals being provided in transportation depots, comprising:
causing the logistics information system to store at least transportation information in a storage device, the transportation information being information in which at least package identification information that allows unique specification of a package, delivery destination identification information that allows unique identification of a delivery destination of the package, and transportation-related information about transportation of the package are associated with each other, sets of the transportation information being stored for respective packages; and
causing the logistics information system to compare the sets of transportation information so as to search for sets of transportation information for packages that: have the same delivery destination identification information; and stay in the same transportation depot at the same moment or are expected to stay in the same transportation depot at the same moment, based on the transportation-related information, and to transmit the pieces of the package identification information included in the searched-out sets of transportation information to the transportation depot terminal provided in the transportation depot in which the packages stay or are expected to stay at the same moment so as to consolidate the packages specified by the searched-out sets of transportation information in one consignment.

2. The logistics support method according to claim 1, wherein, instead of the delivery destination identification information that allows unique identification of a delivery destination of the package, delivery destination area identification information that allows unique identification of a delivery destination area of the package is used.

3. A logistics support system, comprising a logistics information system that performs communication with at least transportation depot terminals via a computer network, the transportation depot terminals being provided in transportation depots, wherein
the logistics information system stores at least transportation information in a storage device, the transportation information being information in which at least package identification information that allows unique specification of a package, delivery destination identification information that allows unique identification of a delivery destination of the package, and transportation-related information about transportation of the package are associated with each other, sets of the transportation information being stored for respective packages, and
the logistics information system compares the sets of transportation information so as to search for sets of transportation information for packages that: have the same delivery destination identification information; and stay in the same transportation depot at the same moment or are expected to stay in the same transportation depot at the same moment, based on the transportation-related information, and transmits the pieces of the package identification information included in the searched-out sets of transportation information to the transportation depot terminal provided in the transportation depot in which the packages stay or are expected to stay at the same moment so as to consolidate the packages specified by the searched-out sets of transportation information in one consignment.

4. The logistics support system according to claim 3, wherein, instead of the delivery destination identification information that allows unique identification of a delivery destination of the package, delivery destination area identification information that allows unique identification of a delivery destination area of the package is used.

5. A logistics support program in a logistics support system including a logistics information system that performs communication with at least transportation depot terminals via a computer network, the transportation depot terminals being provided in each of transportation depots, the program causing the logistics information system to execute processing of:
storing at least transportation information in a storage device, the transportation information being information in which at least package identification information that allows unique specification of a package, delivery destination identification information that allows unique identification of a delivery destination of the package, and transportation-related information about transportation of the package are associated with each other, sets of the transportation information being stored for respective packages; and
comparing the sets of transportation information so as to search for sets of transportation information for packages that: have the same delivery destination identification information; and stay in the same transportation depot at the same moment or are expected to stay in the same transportation depot at the same moment, based on the transportation-related information, and transmitting the pieces of the package identification information included in the searched-out sets of transportation information to the transportation depot terminal provided in the transportation depot in which the packages stay or are expected to stay at the same moment so as to consolidate the packages specified by the searched-out sets of transportation information in one consignment.

6. The logistics support program according to claim 5, wherein, instead of the delivery destination identification information that allows unique identification of a delivery destination of the package, delivery destination area identification information that allows unique identification of a delivery destination area of the package is used.
